# EUROPEAN PATENT APPLICATION

(11) **EP 3 202 491 A1**
(43) Date of publication of application: **09.08.2017**
(21) Application number: 16153781.6
(22) Date of filing: 02.02.2016
(51) Int. Cl.: B01J 13/04, B01F 3/04

(54) **ANTI-BUBBLE GENERATOR**

(71) Applicant: Université Libre de Bruxelles, 1050 Bruxelles (BE); Université de Liège, 4000 Liège (BE)
(72) Inventor: Scheid, Benoit, 1050 Bruxelles (BE); Vitry, Youen, 1050 Bruxelles (BE); Dorbolo, Stéphane, 4050 Chaudfontaine (BE)
(74) Representative: Pronovem

(57) **Abstract**

The present invention is related to an anti-bubble generator comprising:
∘ a bell (1);
∘ an injection tube (2) emerging in the bell (1) for injecting liquid jets or droplets.

## Description

### Field of the invention

The present invention is related to an anti-bubble generator and a method for generating anti-bubbles.

### State of the art

A soap bubble is a sphere formed by a thin film of liquid enclosing a gas, in a gas. However, many people ignore the existence of anti-bubbles similar to a bubble, but having an opposite structure. The anti-bubble is an essentially spherical thin film of gas (shell, membrane), enclosing a liquid, in a liquid. Although the anti-bubble was reported as early as in 1932 and was formally named in 1974, the anti-bubble is still an almost unknown field.

The anti-bubble has many potential applications: air nets formed by anti-bubble foams can filter the air, the gas-liquid surface areas of the anti-bubble foams are very large and can be used for chemical cleaning, or for dissolving gas in liquid, and a specific liquid may be contained inside the anti-bubble for substance transport, and so on. However, practical applications of the anti-bubble are rare, and one of the main reasons is that generation of the anti-bubble is very difficult, generation conditions are strict and the yield is small.

At present, there are only few known methods for generating anti-bubbles. The main method is to impact a liquid surface with droplets or liquid jets, to form a gas membrane between the droplets or liquid jets at the liquid surface. The droplets or liquid jets force the liquid surface to enter into the fluid under the action of gravity, and then the gas membrane is closed and becomes spherical under the action of surface tension, to form anti-bubbles. However, such a method for generating anti-bubbles requires high cleanliness of the liquid surface, the survival rate of the anti-bubbles being very low, and the yield being very small. The size distribution is also almost uncontrolled, leading to broad size distribution.

Therefore, a new technology of generating anti-bubbles that can conveniently generate a large number of anti-bubbles with sufficient survival rate is required and in a monodisperse way, so as to meet the demands of large-scale industrial applications.

### Summary of the invention

The present invention discloses an anti-bubble generator comprising:
o a bell;
o an injection tube emerging in the bell for injecting liquid jets or droplets.

Advantageously, the volume enclosed in the bell is less than 10l, more preferably less than 1l, even more preferably between 1µl and 250 ml, advantageously between 1ml and 100ml.

Preferably, the injection tube end is located at a distance of the opened surface of the bell comprised between 10µm and 100mm, preferably between 2 and 10mm. More preferably, the injection tube may slide relative to the bell to modify the distance between the injection tube end and the opened surface of the bell.

Advantageously, the inner diameter of the injection tube is comprised between 0.05 mm and 5 mm, preferably between 0.2 and 3 mm.

Preferably, the generator comprises means for injecting a gas of predetermined composition and pressure in the bell.

Advantageously, the anti-bubble generator comprises means for injecting intermittent liquid jet of predetermined volume and speed.

Another aspect of the invention is related to a system for generating anti-bubbles comprising a plurality of anti-bubble generator according to the invention.

The invention is also related to a method for generating anti-bubbles comprising the steps of:
∘ providing at least one of any of the previous claims;
∘ providing a first liquid;
∘ immerging the opened surface of the bell of the at least one anti-bubble generator, the opening of the bell being oriented downwards, thereby creating a liquid/gas interface at said opened surface of the bell;
∘ injecting droplets or liquid jets of a second liquid into the first liquid through the liquid/gas interface, thereby producing anti-bubbles.

Preferably, the droplets speed or liquid jets is comprised between 5 and 50cm/s, more preferably between 5 and 60 cm/s, more preferably between 30 and 50cm/s.

Advantageously, the method of the invention comprises the step of flushing the bell with a gas of known composition before generating the anti-bubbles.

Preferably, the volume of gas entrapped in the bell is regulated by gas injection in the bell. Advantageously, the volume of gas entrapped in the bell is adjusted so that the meniscus formed by the liquid/gas interface has a concavity oriented towards the inside of the bell (i.e. the volume of the entrapped gas is a bit larger that the bell volume.

### Short description of the drawings

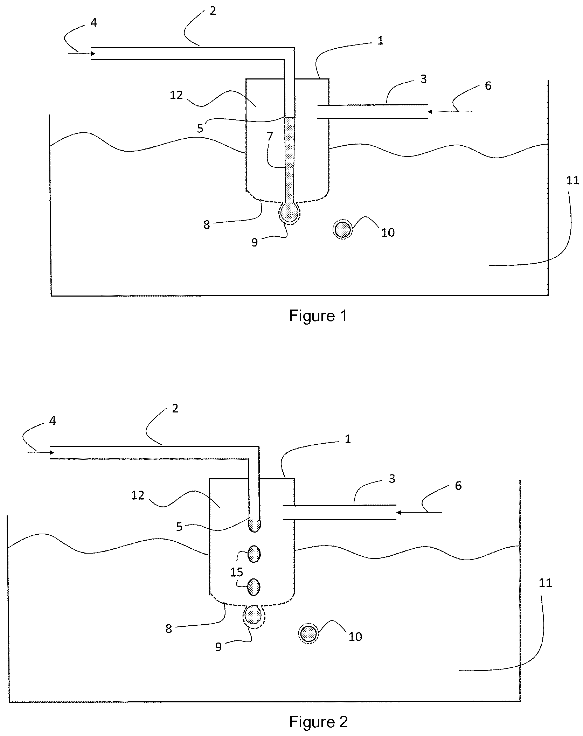

Fig. 1 represents an example of anti-bubble generator according to the invention.
Fig. 2 represents another example of anti-bubble generator according to the invention.
Fig. 3 represents a gas/liquid exchange column comprising of anti-bubble generators according to the invention.
Figure 4 shows anti-bubbles lifetime as a function of anti-bubbles diameters.
Figure 5 shows anti-bubbles lifetime as a function of surfactant concentration.
Figure 6 shows different anti-bubbles stage, from birth to death.
Figure 7 shows an example of micro-fluidic setup of the anti-bubble generator of the invention, during injection of a liquid jet.
Figure 8 shows an example of micro-fluidic setup of the anti-bubble generator of the invention before the injection of a liquid jet.

### List of reference symbols

- 1.: Bell
- 2.: Liquid injection tube
- 3.: Gas injection tube
- 4.: Injected liquid (second liquid)
- 5.: Nozzle
- 6.: Injected gas
- 7.: Liquid jet
- 8.: Gas/liquid interface
- 9.: Anti-bubble membrane
- 10.: Anti-bubble
- 11.: First liquid
- 12.: Entrapped gas
- 13.: Liquid column
- 14.: Exhaust gas pipe
- 15.: Droplets
- 16.: Gas capillary
- 17.: Gas gap between the gas capillary and the inner capillary
- 18.: Inner liquid capillary
- 19.: Microfluidic conduit
- 20.: Microfluidic anti-bubble generator
- 21.: Air cavity

### Detailed description of the invention

In the anti-bubble generator of the invention, the anti-bubbles 10 are generated in a confined environment which permits to have a better control of both the liquid/gas interface 8, and the gas 12 composition. This confinement is obtained by the use of a small bell 1 immersed in a first liquid 11, the bell 1 being oriented downwards, thereby entrapping the gas 12.

The anti-bubbles 10 in the anti-bubble generator of the invention are generated by injecting a second liquid 4 through a tube 2 emerging in the entrapped gas 12, above the first liquid/gas interface 8, in the upper region of the bell 1. The tube 2 end comprises a nozzle 5 that can be a simple orifice, or comprises means for generating individual droplets from a continuous flow in the tube. The liquid injection can be performed by intermittent jet 7, preferably of predetermined speed and volume, or by nebulization of droplets 15 through a spraying nozzle or a vibrating nozzle.

The second liquid 4 is therefore forming the liquid phase entrapped in the gas membrane 9, the anti-bubble 10 being immersed in the second liquid 11.

The anti-bubble generator of the invention is scalable and can produce anti-bubble 10 of the size of a few tenths of micrometers to a few centimetres.

In order to control the size of the anti-bubbles 10, the key parameters are mainly the speed of the jet, the diameter of the nozzle 5, the position of the nozzle 5 relative to the liquid/gas interface 8 (distance and/or orientation), and, in the case of intermittent jet 7, the volume of individual jets 7, or the volume of the droplets 15 in the case of droplets injection.

In use, the distance between the liquid surface and the nozzle 5 is selected so that individual droplets reaches the liquid/gas interface, and the nozzle diameter is selected, along with the jet speed and volume, to determine the droplets volume. Therefore, the distance of the nozzle 5 to the open surface of the bell is preferably comprised between 1 and 100 mm, and the nozzle 5 inner diameter is comprised between 0.01 and 10mm.

When using continuous jet, the speed of the liquid, nozzle diameter and the distance between the nozzle and the liquid is selected so that, due to the Rayleigh-Plateau instability, the jet forms isolated droplets 15 before reaching the liquid/gas interface 8.

By "opened surface of the bell", it is meant in the present invention the surface coinciding, in use, with the liquid/gas interface, when the bell is completely filled up with gas.

The distance between the opened surface of the bell and the nozzle 5 of the injection tube is preferably adjustable.

In the present invention, the interstitial gas (forming the membrane) can advantageously be chosen. It can be a pure gas or a mixture, whose composition can be varied in time.

In order to have a control of the gas enclosed in the anti-bubble membrane, the anti-bubble generator of the invention comprises means for injecting a gas of controlled composition and pressure in the bell. Preferably, the injection means comprises a gas injection tube 3 emerging in the upper region of the bell 1. Advantageously, the gas injection tube 3 is connected to a pressurised source of gas, through a pressure gas regulator.

Preferably, the gas volume inside the bell 1 is regulated by using a level sensor, injecting gas when the level of the liquid/gas interface 8 relative to the bell 1 reaches a predetermined value.

When using air for the membrane forming the anti-bubble, the pressurised source of gas can be a compressor, advantageously combined with filtering means, for filtering dust and other contaminant such as oil.

Alternatively, the source of compressed gas may comprise a cylinder of compressed gas of known composition.

Advantageously, the gas source may also be an exhaust gas to be filtred/cleaned by contact with the first and second liquid.

Preferably, when using the anti-bubble generator of the invention, the bell 1 is flushed with the gas 6 before the first use, after immersion of the bell in the first liquid 11. Advantageously, this flushing is performed by first filling the bell with the first liquid (when possible, by immersing it with its opening upwards), and then filling the bell 1 with the gas 6 of known composition. Thereby, a fresh liquid/gas interface 8 is generated, avoiding contamination from an opened environment.

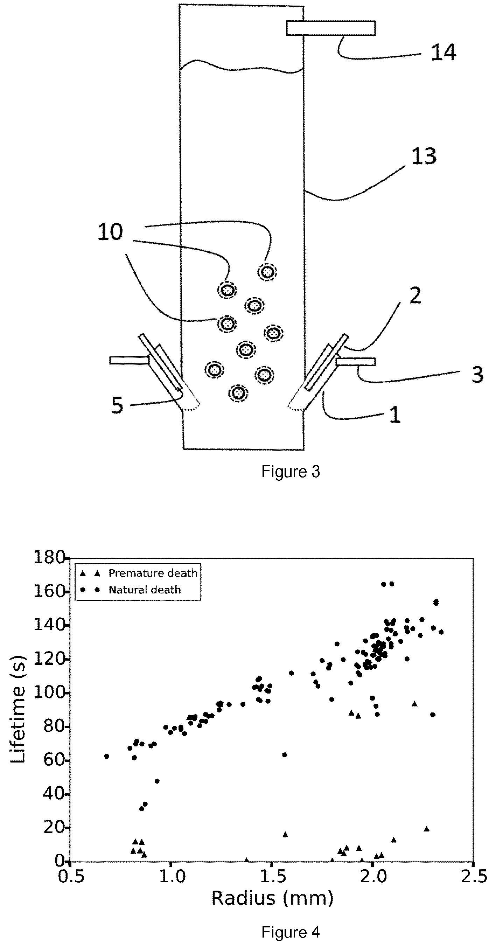

An advantage of the invention is that the anti-bubble 10 can be generated at any depth. This can bring several advantages. For example, the buoyancy of the gas membrane tends to move the anti-bubble upwards, so, generating the anti-bubble at higher depth may increase their survival rate (lifetime). This can be, for example, used for improving gas dissolution or cleaning in a liquid (for example CO₂ in carbonated soft drinks, oxygen in biological reactor,...). For example, a gas/liquid exchanger using the anti-bubble generator of the invention may comprise a high liquid column, comprising at his basis one or several anti-bubble generator of the invention. Such a reactor is represented in fig. 3. In that exchanger, there can be a plurality of complete anti-bubble generator according to the invention, or one or more bell(s) comprising a plurality of injection tubes. For example, the bell may take the form of an annular structure having the same cross-section as represented in figure 3.

Such exchange columns are already known for "normal" bubble (i.e. gas bubbles in a liquid). Those exchange columns are used for example for the cleaning/trapping of combustion gas. Anti-bubbles going up slower than bubbles allow to decrease the height of the absorption column. Thus allowing to build smaller absorption column for the same efficiency.

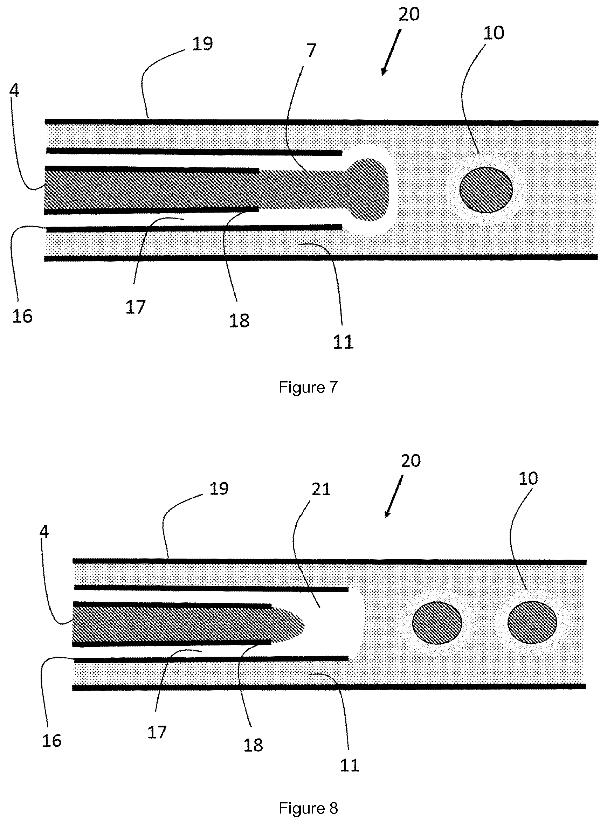

The invention may also be implemented in microfluidic application. A device suitable for such application is for example represented in fig. 7 and 8. In that figure, an inner capillary 18 is enclosed in an intermediate capillary 16 (or gas capillary). And the intermediate capillary 16 is enclosed in a microfluidic conduit 19. Upon use, the microfluidic conduit 19 is filled up with the first liquid, and the intermediate capillary 16 is filled up with a suitable gas. Preferably, the inner capillary 18 end is located inside the intermediate capillary 16 at a predetermined distance of the intermediate capillary 16 end, thereby defining a gas cavity 21 through which the second liquid jet 7 is injected upon use. Preferably, said predetermined distance is comprised between 1 to 4 times the outside diameters of the inner capillary 16. Preferably, the inner surface of the intermediate capillary 16 is a hydrophobic surface, the second liquid presenting a high contact angle on said hydrophobic surface (preferably higher that 90°).

In the case of microfluidic application, the bell wall is therefore formed by the intermediate capillary 16, the gas injection tube being co-axially connected to the bell.

The anti-bubble generator may also advantageously be used for surface rheometry, for measuring critical thickness of film breaking, in microfluidic process, in antifoam systems, for improving contrasts in ultrasonic imagery, or for mixing liquids (i.e. the second liquid being efficiently dispersed in the first liquid by the process of the invention). It can also be used as foam generator in protein skimmer wherein the specific surface of the foam is improved, thereby increasing the ratio between the extracted surfactant (protein) and the interstitial liquid remaining in the foam.

In order to avoid the trapping of the anti-bubbles in the anti-bubble generator when they move upward, the jet angle is advantageously slightly shifted from the vertical. Preferably, the bell axis is also shifted by a small angle from the vertical for the same reason. Alternatively, the anti-bubble may be moved away from the anti-bubble generator by a liquid flow. Or, the buoyancy of the anti-bubble gas membrane can be compensated by increasing the density of the second liquid.

The first and second liquid can be different or not, but preferably, at least one of them comprises a surfactant or a surfactant mixture, to stabilise the gas/liquid interfaces of the gas membrane around the anti-bubble. Preferably, the surfactant comprises a non-ionic surfactant. It advantageously comprises a surfactant of developed chemical formula CₓH₂ₓ₊₁-C₆H₄-(OC₂H₄)-OH, where x is comprised between 6 and 12. The surfactant comprises (or consist of) preferably Triton X-100 and/or Triton C12E6.

The surfactant may also advantageously be based on biologically sourced surfactants such as proteins. Examples of liquids comprising natural protein surfactant are beer, microbiological reactor (for example for activated sludge treatment, or for production of specific molecules in the pharmaceutical industry), seawater (for example in protein skimmer).

Advantageously, the surfactant concentration is above the critical micellar concentration (CMC), preferably, at least 3 times above the CMC, more preferably between 5 and 10 times the CMC. These concentrations are above the CMC in order to reduce the adsorption time at the interface of the surfactant.

Due the confined environment of the liquid/gas interface, the anti-bubbles of the invention comprises less contaminant, such as dust, thereby reducing premature collapsing of the anti-bubble, and improving their lifetime.

### Example

In the present example, a cylindrical bell having an inner diameter of 10 mm and a length of about 30 mm was used. The position of the nozzle was about 10 mm from the open surface, with the possibility of slightly moving the nozzle to optimize anti-bubble generation. The inner diameter of the nozzle was about 1.6 mm.

The liquid jet's formation was produced by a pressure controller and an electric valve. While the controlled pressure adjusts the velocity of the liquid jet, the electric valve allows a fine tuning of the jet duration. Both of these conditions can be adjusted in order to produce anti-bubbles of a desired size.

Equipment are cleaned three times with ethanol and rinsed three times with ultra-pure water. The first liquid (bulk) and the inner core (second liquid) of the anti-bubble is a mixture of ultra-pure water and Triton X100(TX100, Sigma-Aldrich, purity of 99%) at different concentrations.

The liquids are saturated in gas (here air) in order to avoid the dissolution of the gas shell into the liquid. In order to maintain anti-bubbles away from the gas surfaces (both in the bell and the free surface above the first liquid), they are weighed down by adding glycerol to the core mixture (second liquid). Glycerol is flowed at the bottom of the tank so that a gradient density exists in order to avoid the anti-bubble to touch the bottom of the tank and explode from external perturbation.

Figure 4 shows the anti-bubble lifetime versus anti-bubble diameter for a concentration of triton X100 of 5CMC. In this figure, there are two kinds of anti-bubbles.

The lower group represents anti-bubbles that mostly die by touching an other anti-bubble while sinking. The middle group represents anti-bubbles that are closed to another smaller anti-bubble: when the smaller one bursts, the bigger one also explodes. There are also very few anti-bubbles that exploded in the 2 lower groups without any visible explanation. This last situation is much less frequent than it is with prior art anti-bubble generator.

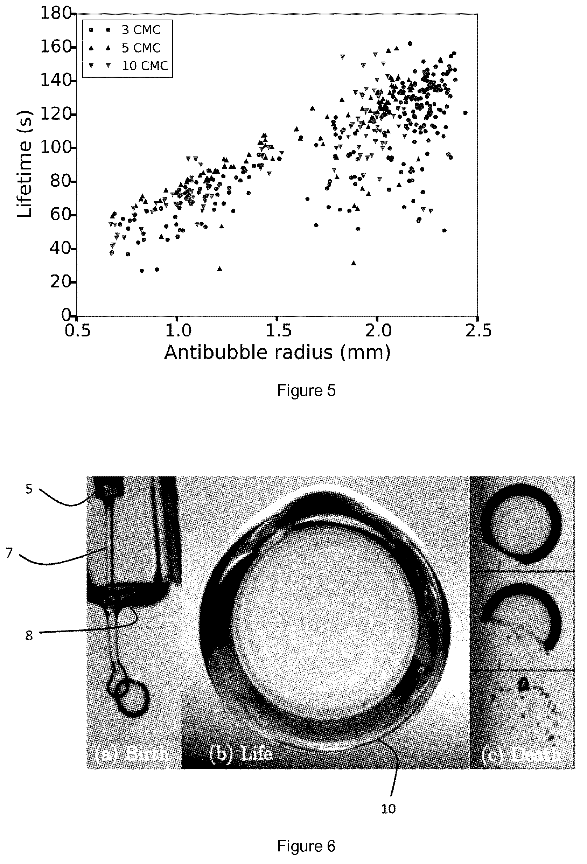

Figure 5 shows the lifetime of anti-bubbles as a function of Triton X100 concentration, from 3 to 10 times CMC. Explained premature death has been rejected from results in this figure.

A clear influence of the radius on the maximum lifetime of an anti-bubble can be seen in this figure.

## Claims

1. Anti-bubble generator comprising:
∘ a bell (1);
∘ an injection tube (2) emerging in the bell (1) for injecting liquid jets or droplets.

2. The anti-bubble generator of claim 1 wherein the volume (12) enclosed in the bell is less than 1l.

3. The anti-bubble generator of any of the previous claims wherein the injection tube end is located at a distance of the opened surface of the bell comprised between 10µm and 10mm.

4. The anti-bubble generator of any of the previous claims wherein the injection tube may slide relative to the bell to determine the distance between the opened surface of the bell and the injection tube end (5).

5. The anti-bubble generator of any of the previous claims wherein the inner diameter of the injection tube (2) is comprised between 0.01 and 10mm.

6. The anti-bubble generator of any of the previous claims wherein the generator comprises means (6) for injecting a gas of predetermined composition and pressure in the bell (1).

7. The anti-bubble generator of any of the previous claims comprising means for injecting intermittent liquid jet of predetermined volume and speed.

8. System for generating anti-bubbles comprising a plurality of anti-bubble generators according to any of the previous claims.

9. Method for generating anti-bubbles comprising the steps of:
∘ providing a first liquid (11);
∘ providing a gas/liquid interface at a depth below the liquid surface;
∘ injecting droplets (15) or liquid jets (7) of a second liquid (4) into the first liquid (11) through the liquid/gas interface, thereby producing anti-bubbles (10).

10. The method of claim 9 comprising the step of providing at least one anti-bubble generator according to any of claim 1 to 8, wherein the gas liquid interface is provided by immerging the opened surface of the bell (1) of the at least one anti-bubble generator, the opening of the bell (1) being oriented downwards, thereby creating a liquid/gas interface (8) at said opened surface of the bell (1);

11. The method of claim 9 or 10 wherein the droplets speed or liquid jets is comprised between 5 and 60cm/s.

12. The method of any of claim 9 to 11 wherein the second liquid is different from first liquid.

13. The method of any of claim 9 to 12 wherein the first and/or second liquid comprises a surfactant.

14. The method of claim 13 wherein the surfactant is a non-ionic surfactant.

15. The method of claim 13 wherein the surfactant is selected from the group consisting of Triton surfactant and protein surfactant.
